# FASCICULE DE BREVET EUROPEEN

(11) **EP 3 966 835 B1**
(45) Date de publication et mention de la délivrance du brevet: **05.04.2023**
(21) Numéro de dépôt: 20723139.0
(22) Date de dépôt: 07.05.2020
(51) Int. Cl.: G21C 3/328, G21C 5/18, G21C 3/326, G21C 3/62

(54) **ASSEMBLAGE DE COMBUSTIBLE NUCLÉAIRE POUR RÉACTEUR À EAU PRESSURISÉE ET COEUR DE RÉACTEUR NUCLÉAIRE CONTENANT UN TEL ASSEMBLAGE**
KERNBRENNSTABBÜNDEL FÜR DRUCKWASSERREAKTOR UND KERNREAKTORKERN MIT SOLCH EINEM BÜNDEL
NUCLEAR FUEL ASSEMBLY FOR PRESSURISED WATER REACTOR AND NUCLEAR REACTOR CORE CONTAINING SUCH AN ASSEMBLY

(30) Priorité: 10.05.2019 FR 1904874
(43) Date de publication de la demande: 16.03.2022
(73) Titulaire: FRAMATOME, 92400 Courbevoie (FR)
(72) Inventeur: ZHENG, Songhui, 69680 CHASSIEU (FR); DUPERRAY, Baptiste, 69100 VILLEURBANNE (FR)
(74) Mandataire: Lavoix
(86) Numéro de dépôt international: PCT/EP2020/062680
(87) Numéro de publication internationale: WO 2020/229288

(56) Documents cités:
- EP-A1- 0 153 240
- WO-A1-2011/015755
- FR-A1- 2 693 023
- US-A1- 2002 118 789

## Description

La présente invention concerne un assemblage de combustible nucléaire pour réacteur à eau pressurisée, permettant le multi-recyclage de combustible nucléaire.

Le recyclage des assemblages de combustible nucléaire de réacteur à eau pressurisée irradiés, dont le combustible, avant irradiation, ne contient pas d'oxyde de plutonium mais uniquement de l'oxyde d'uranium, est mis en oeuvre depuis longtemps. De tels assemblages sont en général dénommés assemblages UOX et la matière fissile qu'ils contiennent combustible UOX. Le plutonium recyclé à partir des assemblages UOX irradiés peut être mélangé, sous forme d'oxyde, avec de l'oxyde d'uranium, généralement appelé matière support ou uranium support, pour constituer des assemblages de combustible nucléaire dénommés assemblages MOX (pour Mixed OXide) et la matière fissile qu'ils contiennent combustible MOX. Ces assemblages MOX contiennent, avant irradiation, uniquement du combustible MOX. Ces assemblages MOX sont conçus pour obtenir l'équivalence énergétique par rapport aux assemblages UOX avec lesquels ils cohabitent dans le coeur du réacteur nucléaire. Un exemple d'un tel assemblage MOX est en particulier décrit dans la demande de brevet antérieure FR 2 693 023 A1. Cet assemblage ne donne cependant pas entière satisfaction. En effet, cet assemblage est conçu pour obtenir l'équivalence énergétique dans le cas où le plutonium des crayons MOX provient d'assemblages UOX irradiés, mais ne permet pas d'obtenir de manière satisfaisante l'équivalence énergétique pour du plutonium dit « multi-recyclé », c'est-à-dire issu du recyclage de combustibles MOX irradiés.

Le concept de multi-recyclage, c'est-à-dire de recyclages successifs du combustible issu d'assemblages MOX irradiés, est étudié depuis de nombreuses années et diverses variations de conception des assemblages ont été étudiées à des fins de constitution de coeurs chargés uniquement d'assemblages MOX, appelés coeurs 100% MOX dans la suite. Les résultats de telles études sont notamment décrits dans les articles G. Youinou et al. : Plutonium Multirecycling in Standard PWRs loaded with Evolutionary Fuels, Nuclear Science and Engineering 151 (2005) pp.25-45 et A. Vasile : Advanced fuels for plutonium management in pressurized water reactors, Journal of Nuclear Materials 319 (2003) pp.173-179.

Dans le cas de coeurs 100% MOX, tels que ceux décrits dans les articles évoqués ci-dessus, la question de l'équivalence énergétique avec des assemblages UOX n'est pas abordée.

Il est cependant souhaitable de concevoir des assemblages permettant l'utilisation de combustible multi-recyclé et susceptibles d'être utilisés dans des coeurs mixtes comprenant à la fois du combustible MOX et des assemblages UOX, plutôt que dans des coeurs 100% MOX.

En effet, l'exploitation d'un réacteur à eau pressurisée en configuration coeur 100% MOX est plus délicate que l'exploitation en configuration coeur 100% UOX ou même en configuration coeur mixte, c'est-à-dire coeur contenant à la fois des assemblages UOX et des assemblages MOX équivalents énergétiquement à ces assemblages UOX. En particulier, l'efficacité des absorbants habituellement utilisés (grappes de commande et bore dissous dans l'eau du circuit primaire) est réduite dans le cas d'un coeur 100% MOX. En effet, le spectre neutronique du combustible UOX est plus thermique que celui du combustible MOX, c'est-à-dire qu'il contient une proportion de neutrons thermiques (énergie < 0.1 eV) plus importante permettant une meilleure absorption des neutrons par les absorbants. Par conséquent, le contrôle d'un coeur 100% MOX nécessite l'adaptation de ces absorbants. Par ailleurs, quelques jours après l'arrêt de l'irradiation, la puissance résiduelle des assemblages MOX irradiés devient plus élevée que celle des assemblages UOX irradiés, ce qui peut compliquer l'évacuation de la chaleur résiduelle des assemblages pendant les phases d'arrêt du réacteur ou dans les piscines de désactivation.

Cependant, le recyclage du combustible MOX entraîne une dégradation du vecteur isotopique du plutonium obtenu, appelé par la suite plutonium recyclé. Cette dégradation déjà présente sur le plutonium recyclé de première génération, c'est-à-dire le plutonium recyclé issu d'un assemblage MOX irradié dont le plutonium était issu de l'irradiation d'un assemblage UOX, s'amplifie au fil des recyclages, c'est-à-dire lorsque le plutonium recyclé est issu d'un assemblage MOX irradié dont le plutonium était lui-même du plutonium recyclé. Le plutonium recyclé contient en effet moins d'isotopes fissiles et plus d'isotopes absorbants rendant difficile l'obtention de l'équivalence énergétique.

L'équivalence énergétique peut être restaurée par exemple en enrichissant l'uranium support utilisé pour fabriquer le combustible MOX recyclé, c'est-à-dire le combustible MOX dont le plutonium est issu d'assemblages MOX irradiés. Toutefois, cette augmentation d'enrichissement de l'uranium support conduit à devoir gérer en usine de fabrication d'assemblages MOX plusieurs matières uranium de différents enrichissements complexifiant ainsi le procédé de fabrication et augmentant le risque d'erreur.

US 2002/118 789 A1 décrit un assemblage de combustible nucléaire.

WO 2011/015755 A1 décrit un procédé d'exploitation d'un réacteur nucléaire à eau pressurisée permettant de passer d'un cycle d'équilibre au plutonium et à un cycle d'équilibre à l'uranium et assemblage de combustible nucléaire correspondant.

Par conséquent, un but de l'invention est de fournir un assemblage de combustible nucléaire pour un réacteur à eau pressurisée permettant l'utilisation de combustible MOX multi-recyclé dans des coeurs comprenant également du combustible UOX et/ou du combustible MOX issu de combustible UOX, tout en étant susceptible d'être fabriqué dans une installation de fabrication d'assemblages MOX existante, sans entraîner de complexification du processus de fabrication.

A cet effet, l'invention a pour objet un assemblage de combustible nucléaire selon la revendication 1.

Selon des modes particuliers de réalisation, l'assemblage de combustible nucléaire peut comprendre l'une ou plusieurs des caractéristiques des revendications 2 à 9, prise(s) isolément ou selon toutes les combinaisons techniquement possibles.

L'invention concerne également un coeur de réacteur nucléaire à eau pressurisée selon la revendication 10.

Selon des modes particuliers de réalisation, le coeur de réacteur nucléaire peut comprendre l'une ou plusieurs des caractéristiques des revendications 11 à 14.

L'invention sera mieux comprise à la lecture de la description qui va suivre, donnée uniquement à titre d'exemple, et faite en se référant aux dessins annexés, sur lesquels :
[Fig 1] la figure 1 est une vue schématique illustrant un réacteur nucléaire à eau pressurisée,
[Fig 2] la figure 2 est une vue schématique de dessus montrant une répartition possible des assemblages de combustible nucléaire et des grappes de commande dans le coeur du réacteur nucléaire de la figure 1,
[Fig 3] la figure 3 est une vue schématique latérale d'un assemblage de combustible nucléaire du coeur du réacteur nucléaire de la figure 1,
[Fig 4] la figure 4 est une vue schématique de dessus illustrant une répartition des crayons de combustible nucléaire dans l'assemblage de la figure 3 selon un premier mode de réalisation de l'invention,
[Fig 5] la figure 5 est une vue schématique en coupe longitudinale d'un crayon de combustible de l'assemblage de la figure 3,
[Fig 6] la figure 6 est vue schématique partielle en coupe longitudinale d'une grappe de commande du réacteur nucléaire de la figure 1,
[Fig 7] la figure 7 est une vue schématique de dessus illustrant une répartition des crayons de combustible nucléaire dans l'assemblage de la figure 3 selon un deuxième mode de réalisation de l'invention,
[Fig 8] la figure 8 est une vue schématique de dessus illustrant une répartition des crayons de combustible nucléaire dans l'assemblage de la figure 3 selon un troisième mode de réalisation de l'invention,
[Fig 9] la figure 9 est une vue schématique de la distribution radiale de puissance dans les crayons de combustible de l'assemblage de la figure 4, en début d'irradiation,
[Fig 10] la figure 10 est une vue schématique de la distribution radiale de puissance dans les crayons de combustible de l'assemblage de la figure 7, en début d'irradiation, et
[Fig 11] la figure 11 est une vue schématique de la distribution radiale de puissance dans les crayons de combustible de l'assemblage de la figure 8, en début d'irradiation.

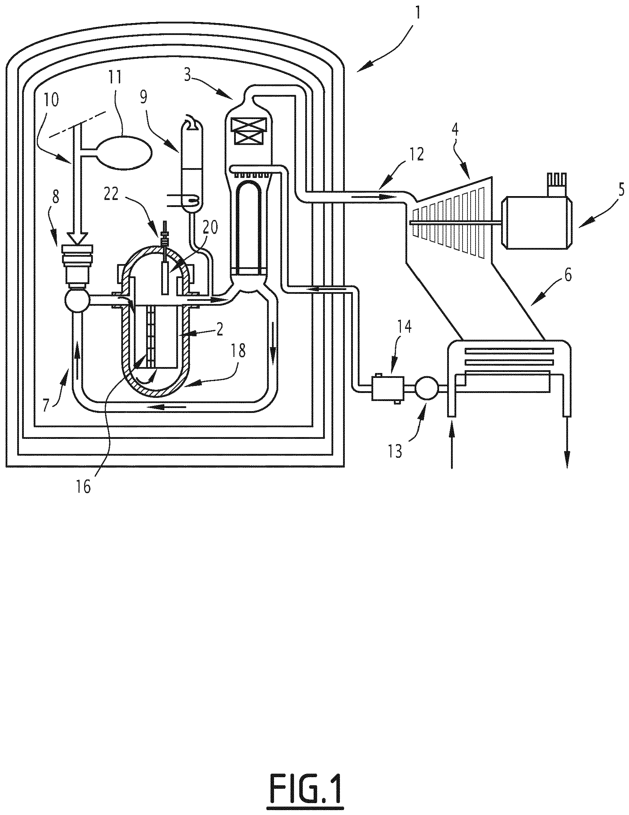

La figure 1 illustre schématiquement un réacteur nucléaire 1 à eau pressurisée qui comprend classiquement un coeur 2, et un ou plusieurs de chacun des éléments ci-dessous, un seul de chacun de ces éléments étant représenté sur la figure 1 :
- un générateur de vapeur 3,
- une turbine 4 couplée à un générateur 5 d'énergie électrique, et
- un condenseur 6.

Le réacteur 1 comprend un réflecteur (non représenté).

Le réacteur 1 comprend en outre un circuit primaire 7 équipé de pompes 8 et dans lequel circule de l'eau sous pression, selon le trajet matérialisé par les flèches sur la figure 1. Cette eau remonte notamment au travers du coeur 2 pour y être réchauffée en assurant la réfrigération et la modération dans le coeur 2.

Le circuit primaire 7 comprend en outre un pressuriseur 9 permettant de réguler la pression de l'eau circulant dans le circuit primaire 7.

Un circuit 10 dit réseau d'appoint d'eau ou encore REA est raccordé au circuit primaire 7, par exemple via la pompe 8, afin d'alimenter en eau le circuit primaire 7. Le circuit REA 10 comprend par exemple des réservoirs 11 contenant du bore soluble, par exemple sous forme d'acide borique H₃BO₃. Le circuit REA 10 permet ainsi d'introduire du bore dans l'eau du circuit primaire 7 et donc de diminuer la réactivité dans le coeur 2. De préférence, le bore contenu dans le réservoir 11 est enrichi en bore 10, par exemple pour que sa teneur atomique en cet isotope soit supérieure à 40 % et soit par exemple d'environ 50 %. On rappelle que la teneur atomique en isotope de masse atomique 10 du bore naturel est d'environ 20 %.

L'eau du circuit primaire 7 alimente également le générateur de vapeur 3 où elle est refroidie en assurant la vaporisation d'eau circulant dans un circuit secondaire 12.

La vapeur produite par le générateur de vapeur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le coeur 2 comprend des assemblages 16 de combustible nucléaire qui sont chargés dans une cuve 18. Un seul assemblage 16 est représenté sur la figure 1, mais le coeur 2 comprend par exemple 241 assemblages 16.

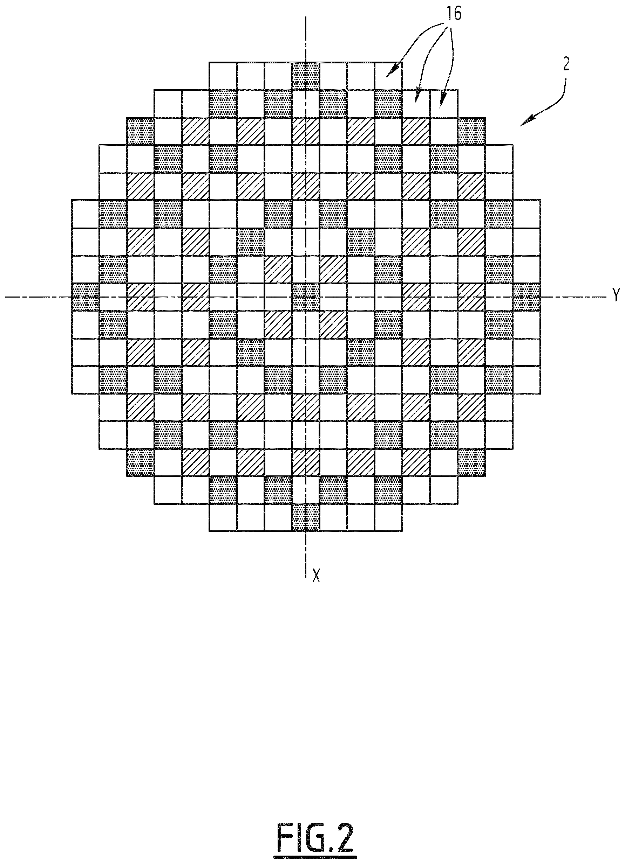

La figure 2 montre en vue de dessus un exemple de répartition de ces différents assemblages 16 au sein du coeur 2. Chaque carré y matérialise un assemblage 16.

Classiquement, lors de l'exploitation du réacteur 1, celui-ci fonctionne pendant des cycles successifs qui sont séparés par des étapes de remplacement au cours desquelles les assemblages 16 usés sont remplacés par des assemblages 16 frais et les assemblages 16 restant dans le coeur 2 peuvent changer de position.

Le réacteur 1 comprend des grappes de commande 20 (figure 1) qui sont disposées dans la cuve 18 au-dessus de certains assemblages 16. Une seule grappe 20 est représentée sur la figure 1, mais le coeur 2 peut comprendre par exemple 89 grappes 20.

Les grappes 20 peuvent être déplacées par des mécanismes 22 pour venir s'insérer dans les assemblages 16 qu'elles surplombent ou en être extraites.

Classiquement, chaque grappe 20 comprend des crayons absorbants qui comportent un ou plusieurs matériaux absorbant les neutrons et éventuellement des crayons inertes, c'est-à-dire qui n'ont pas de capacité spécifique d'absorption des neutrons.

Ainsi, le déplacement vertical des grappes 20 permet de régler la réactivité dans le coeur 2 et autorise des variations de la puissance globale P fournie par le coeur 2 depuis la puissance nulle jusqu'à la puissance nominale PN, en fonction de l'enfoncement des grappes de commande 20 dans les assemblages 16.

Certaines de ces grappes 20 sont destinées à assurer la régulation du fonctionnement du coeur 2, par exemple en puissance ou en température, et sont dénommées grappes de contrôle. D'autres sont destinées uniquement à l'arrêt du réacteur 1 et sont dénommées grappes d'arrêt.

Dans l'exemple représenté, le réacteur 1 comprend 40 grappes de contrôle et 49 grappes d'arrêt. Les assemblages 16 surmontés d'une grappe de contrôle sont repérés par des hachures et ceux surmontés d'une grappe d'arrêt par des points sur la figure 2.

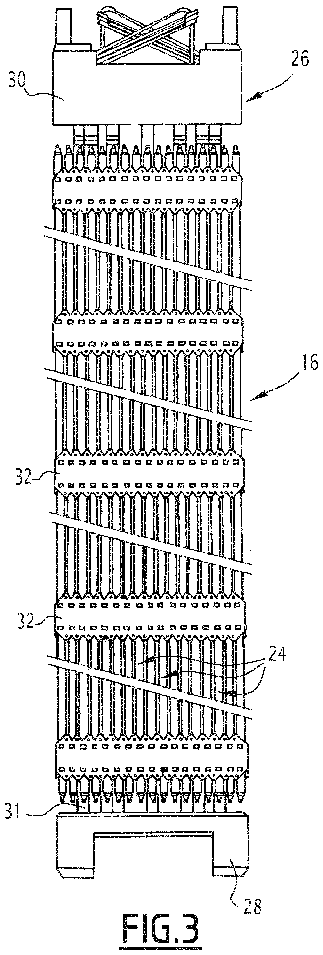

Comme illustré par la figure 3, chaque assemblage 16 comprend un faisceau de crayons 24 de combustible nucléaire et un squelette 26 de support des crayons 24.

Le squelette 26 comprend classiquement un embout inférieur 28, un embout supérieur 30, des tubes-guides 31 reliant les deux embouts 30 et 28 et destinés à recevoir des crayons des grappes 20, et des grilles entretoises 32.

Optionnellement, l'assemblage 16 comprend en outre un tube d'instrumentation.

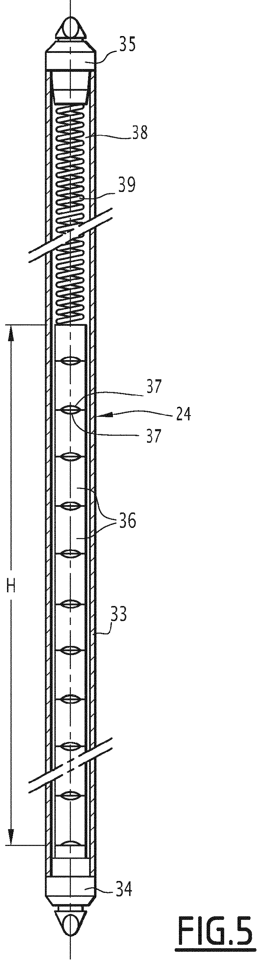

Comme illustré par la figure 5, chaque crayon 24 comprend, de manière classique, une gaine 33 sous forme d'un tube circulaire fermé par un bouchon inférieur 34 et un bouchon supérieur 35. Le crayon 24 renferme le combustible nucléaire conditionné par exemple sous forme d'une série de pastilles 36 empilées dans la gaine 33 et prenant appui contre le bouchon inférieur 34. Un ressort de maintien 39 est disposé dans le tronçon supérieur de la gaine 33 pour prendre appui sur le bouchon supérieur 35 et sur la pastille 36 supérieure.

Les pastilles 36 peuvent comporter des évidements 37 en forme de calottes sphériques. De préférence, ces pastilles 36 sont néanmoins pleines et ne comportent donc pas, par exemple, de passage traversant leur conférant une forme annulaire.

Un espace 38 d'expansion des gaz produits lors de l'irradiation du combustible nucléaire est délimité à l'intérieur de la gaine 33 par le combustible nucléaire, le bouchon inférieur 34, le bouchon supérieur 35 et le ressort 39.

A titre d'exemple, la gaine 33 est en alliage de zirconium.

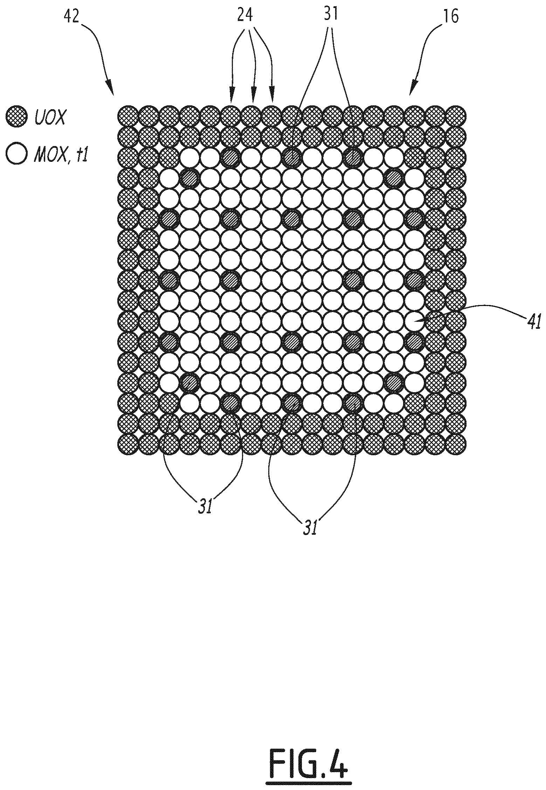

La figure 4 illustre un assemblage 16 selon un mode de réalisation particulier de l'invention.

Dans cet assemblage 16, les crayons 24, les tubes-guides 31 et un éventuel tube d'instrumentation (non présent dans l'exemple illustré) occupent les noeuds d'un réseau régulier à base carrée. Lorsqu'il est présent, le tube d'instrumentation occupe le noeud central de l'assemblage 16. Sinon, et comme cela est représenté sur la figure 4, le noeud central de l'assemblage 16 est occupé par un crayon 24.

De préférence, les noeuds du réseau sont occupés chacun par un crayon 24, par un tube-guide 31 ou par le tube d'instrumentation. Ainsi, tous les noeuds du réseau sont occupés par un crayon 24, un tube d'instrumentation ou un tube-guide 31. Les assemblages 16 ne comportent donc de préférence pas de trou d'eau dans leur réseau.

A titre d'exemple, les crayons 24, les tubes-guides 31 et l'éventuel tube d'instrumentation forment ici un réseau régulier à base carrée de 17 crayons de côté. L'assemblage 16 comprend alors par exemple un tube d'instrumentation, 24 tubes-guides 31 et 264 crayons 24 ou encore, dans le cas où il ne comprend pas de tube d'instrumentation, 24 tubes-guides 31 et 265 crayons 24.

L'assemblage 16 étant destiné à un réacteur à eau pressurisée de type occidental, il ne comprend pas de boîtier extérieur entourant les crayons 24, contrairement aux assemblages destinés à certains types de réacteurs à eau pressurisée de conception russe dans lesquels ce boîtier canalise l'eau de modération ou aux assemblages destinés à des réacteurs à eau bouillante, dans lesquels le boîtier canalise l'eau et la vapeur de modération.

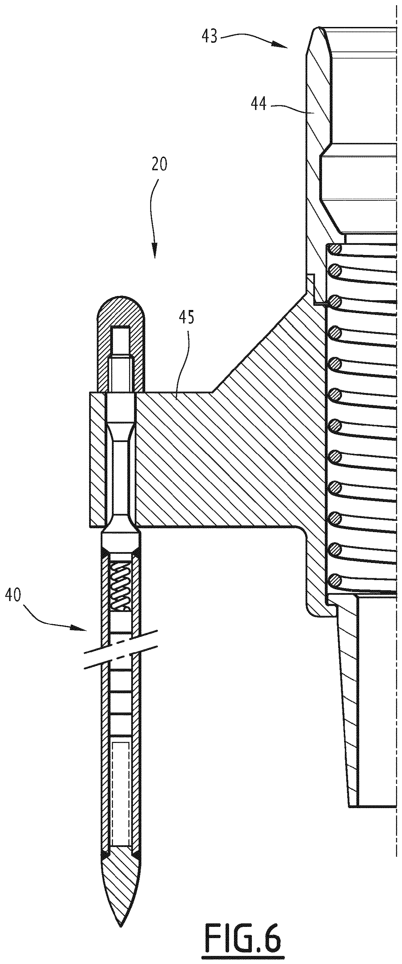

La figure 6 illustre plus particulièrement la structure d'une grappe de commande 20. Cette grappe 20 comporte des crayons absorbants 40 et une araignée 43 assurant le support et le maintien des crayons absorbants 40 sous la forme d'un faisceau dans lequel les crayons absorbants 40 sont parallèles entre eux et positionnés latéralement suivant le même réseau que celui des tubes-guides 31 de l'assemblage 16 correspondant.

L'araignée 43 comporte par exemple un pommeau 44 permettant de raccorder la grappe 20 au mécanisme de déplacement 22 correspondant et des ailettes 45 solidaires du pommeau 44 sur chacune desquelles sont fixés un ou plusieurs crayons absorbants 40.

Comme cela est représenté sur la figure 4, l'assemblage 16 selon l'invention comprend :
- une zone centrale 41, tous les crayons 24 de la zone centrale 41 étant des crayons 24 dont le combustible, avant irradiation, est exclusivement à base d'oxyde mixte d'uranium et de plutonium, c'est-à-dire du combustible MOX ; et
- une zone périphérique 42 s'étendant le long des faces extérieures de l'assemblage 16, tous les crayons 24 de la zone périphérique 42 contenant, avant irradiation, de l'oxyde d'uranium mais pas d'oxyde de plutonium, c'est-à-dire du combustible UOX.

Les crayons 24 de l'assemblage 16 sont ainsi répartis en deux zones, à savoir une zone centrale 41, qui contient les crayons 24 de combustible MOX de l'assemblage 16, et une zone périphérique 42, qui contient les crayons 24 de combustible UOX de l'assemblage 16. Tous les crayons 24 de l'assemblage 16 appartiennent soit à la zone centrale 41, soit à la zone périphérique 42.

A titre d'exemple, dans le cas où l'assemblage 16 comprend 265 crayons 24, il comprend par exemple 124 crayons 24 de combustible UOX et 141 crayons 24 de combustible MOX.

Les crayons 24 de la zone centrale 41 et de la zone périphérique 42 sont disposés aux noeuds du réseau régulier à base carrée de l'assemblage 16 qui ne sont pas occupés par un tube-guide 31 ou un éventuel tube d'instrumentation.

La zone périphérique 42 comprend au moins la couche extérieure de crayons 24.

Chaque couche de crayons 24 présente une épaisseur d'un crayon 24, et s'étend sur toute la circonférence de l'assemblage 16.

Plus particulièrement, dans l'exemple représenté sur la figure 4, la zone périphérique 42 comprend au moins deux couches de crayons 24 adjacentes, la première couche correspondant à la couche extérieure de crayons 24 de l'assemblage 16 et la deuxième couche correspondant à la couche de crayons 24 adjacente à la première couche. A titre d'exemple, et comme cela est représenté sur la figure 4, la zone périphérique 42 comprend en outre certains crayons 24 d'une troisième couche de crayons 24 adjacente à la deuxième couche en direction de l'intérieur de l'assemblage 16. En particulier, dans l'exemple représenté, la zone périphérique 42 comprend les crayons de coin de la troisième couche de crayons 24.

Le nombre de couches de crayons 24 de la zone périphérique 42 peut être différent de celui représenté sur la figure 4, et dépend en particulier de l'équivalence énergétique que l'on cherche à obtenir.

L'uranium des crayons 24 de la zone périphérique 42 présente, de préférence, une teneur massique en uranium 235 inférieure ou égale à 7,5%.

Dans le cas d'un coeur 2 mixte, c'est-à-dire comprenant à la fois des assemblages UOX et des assemblages 16 selon l'invention, l'uranium des crayons 24 de la zone périphérique 42 présente, de préférence, une teneur massique en uranium 235 supérieure ou égale à celle de l'uranium des crayons 24 des assemblages 16 de combustible UOX présents en même temps dans le coeur 2 du réacteur 1.

A titre d'option, certains des crayons 24 de combustible UOX de la zone périphérique 42 sont des crayons empoisonnés, c'est-à-dire comprenant un poison neutronique. De préférence, les crayons 24 de combustible UOX empoisonnés de la zone périphérique 42 sont adjacents à des crayons 24 de combustible MOX de la zone centrale 41. Le poison neutronique comprend par exemple un oxyde de terres rares, tel que de l'oxyde de gadolinium.

Dans l'exemple représenté, la zone centrale 41 de l'assemblage 16 comprend, outre les crayons 24, une pluralité de tubes-guides 31.

La zone centrale 41 comprend toutes les couches de crayons 24 à partir du centre de l'assemblage 16 jusqu'à la zone périphérique 42, ainsi que les éventuels crayons 24 de la couche dont les crayons de coin appartiennent à la zone périphérique 42.

De préférence, l'uranium des crayons 24 de combustible MOX de la zone centrale 41 présente une teneur massique en uranium 235 strictement inférieure à celle de l'uranium des crayons 24 de combustible UOX de la zone périphérique 42.

A titre d'exemple, l'uranium des crayons 24 de combustible MOX de la zone centrale 41 est un uranium naturel présentant une teneur massique en uranium 235 environ égale à 0,7% ou un uranium appauvri, présentant par exemple une teneur massique en uranium 235 comprise entre 0,2 et 0,4%, et notamment environ égale à 0,25%.

Tous les crayons 24 de combustible MOX de la zone centrale 41 présentent, de préférence, une même composition (ou vecteur) isotopique du plutonium, c'est-à-dire la même composition, hormis les différences résultant nécessairement de la fabrication, en termes de pourcentage des fractions massiques respectives de chaque isotope constitutif du plutonium et de l'américium 241, produit par la décroissance du plutonium 241.

A titre d'exemple, les crayons 24 de combustible MOX de la zone centrale 41 contiennent du plutonium provenant de l'irradiation de combustible UOX.

Plus particulièrement, selon un mode de réalisation, les crayons 24 de combustible MOX de la zone centrale 41 contiennent uniquement du plutonium provenant de l'irradiation de combustible UOX. Dans ce cas, à titre d'exemple, le plutonium des crayons 24 de combustible MOX présente la composition suivante, en pourcentage massique :

**[Tableau 1]**

| | 238Pu | 239Pu | 240Pu | 241Pu | 242Pu | 241 Am |
|---|---|---|---|---|---|---|
| V1 | 3,1 | 52,7 | 25,8 | 8,3 | 8,5 | 1,7 |

### Exemple de composition isotopique du plutonium provenant de l'irradiation de combustible UOX

Le combustible V1 décrit au tableau 1 ci-dessus est obtenu par exemple par irradiation de combustible UOX enrichi initialement à 3,7% en uranium 235 et irradié jusqu'à un taux de combustion d'environ 50 GWJ/tML.

Selon un mode de réalisation alternatif, le plutonium des crayons 24 de combustible MOX de la zone centrale 41 résulte du mélange de plutonium provenant de l'irradiation de combustible UOX avec du plutonium provenant de l'irradiation de combustible MOX. Comme cela a été expliqué plus haut, le plutonium provenant de l'irradiation de combustible UOX présente une teneur en isotopes fissiles (plutonium 239 et plutonium 241) plus élevée que le plutonium provenant de l'irradiation de combustible MOX, la teneur en isotopes fissiles diminuant au fur et à mesure des recyclages. Par conséquent, le mélange de plutonium provenant de l'irradiation de combustible UOX avec du plutonium provenant de l'irradiation de combustible MOX permet d'ajuster la composition isotopique du plutonium dans le crayon 24 de combustible MOX de sorte à obtenir une teneur souhaitée en isotopes fissiles, tout en utilisant du plutonium multi-recyclé.

A titre d'exemple, on trouvera ci-dessous des compositions isotopiques typiques, en pourcentage massique, du plutonium obtenu par mélange tel que décrit ci-dessus et susceptible d'être utilisé dans le combustible MOX des crayons 24 de combustible MOX de l'assemblage 16.

**[Tableau 2]**

| | 238Pu | 239Pu | 240Pu | 241Pu | 242Pu | 241Am |
|---|---|---|---|---|---|---|
| V2 | 3,7 | 44,1 | 31,0 | 8,6 | 11,2 | 1,4 |
| V3 | 3,5 | 46,0 | 28,9 | 8,7 | 11,3 | 1,6 |
| V4 | 3,5 | 46,5 | 28,4 | 8,7 | 11,4 | 1,6 |
| V5 | 3,5 | 46,6 | 28,3 | 8,7 | 11,4 | 1,6 |

### Exemples de compositions isotopiques du plutonium

Dans le tableau 2 ci-dessus :
- le combustible V2 est obtenu par mélange de combustible V1 tel que décrit au tableau 1 avec du combustible V1' résultant de l'irradiation de combustible MOX dont le plutonium présente la composition isotopique V1 jusqu'à un taux de combustion d'environ 46 GWJ/tML et, après 9 ans de décroissance, récupération de plutonium par séparation de matière nucléaire puis décroissance de 3 ans par stockage avant réintroduction dans un réacteur 1 ;
- le combustible V3 est obtenu par mélange de combustible V1 tel que décrit au tableau 1 avec du combustible V2' résultant de l'irradiation de combustible MOX dont le plutonium présente la composition isotopique V2 jusqu'à un taux de combustion d'environ 46 GWJ/tML et, après 9 ans de décroissance, récupération de plutonium par séparation de matière nucléaire puis décroissance de 3 ans par stockage avant réintroduction dans un réacteur 1 ;
- le combustible V4 est obtenu par mélange de combustible V1 tel que décrit au tableau 1 avec du combustible V3' résultant de l'irradiation de combustible MOX dont le plutonium présente la composition isotopique V3 jusqu'à un taux de combustion d'environ 46 GWJ/tML et, après 9 ans de décroissance, récupération de plutonium par séparation de matière nucléaire puis décroissance de 3 ans par stockage avant réintroduction dans un réacteur 1 ;
- le combustible V5 est obtenu par mélange de combustible V1 tel que décrit au tableau 1 avec du combustible V4' résultant de l'irradiation de combustible MOX dont le plutonium présente la composition isotopique V4 jusqu'à un taux de combustion d'environ 46 GWJ/tML et, après 9 ans de décroissance, récupération de plutonium par séparation de matière nucléaire puis décroissance de 3 ans par stockage avant réintroduction dans un réacteur 1.

Le tableau 3 ci-dessous présente les compositions isotopiques V1', V2', V3' et V4', en pourcentage massique :

**[Tableau 3]**

| | 238Pu | 239Pu | 240Pu | 241Pu | 242Pu | 241 Am |
|---|---|---|---|---|---|---|
| V1' | 3,9 | 42,7 | 31,7 | 8,7 | 11,7 | 1,4 |
| V2' | 4,1 | 37,3 | 32,6 | 9,4 | 15,1 | 1,5 |
| V3' | 4,0 | 38,4 | 31,6 | 9,3 | 15,2 | 1,4 |
| V4' | 4,0 | 38,6 | 31,5 | 9,3 | 15,2 | 1,4 |

### Exemples de compositions isotopiques du plutonium multi-recyclé

Les compositions isotopiques indiquées dans les tableaux 1 à 3 sont données uniquement à titre d'exemple, et toute autre composition isotopique du plutonium adaptée pourrait être utilisée dans les crayons 24 de combustible MOX de l'assemblage 16.

A titre d'option, certains des crayons 24 de combustible MOX de la zone centrale 41 sont des crayons empoisonnés, c'est-à-dire comprenant un poison neutronique. Chaque crayon 24 de combustible MOX empoisonné de la zone centrale 41 est de préférence adjacent à un crayon 24 de combustible UOX de la zone périphérique 42. Le poison neutronique comprend par exemple un oxyde de terres rares, tel que de l'oxyde de gadolinium. Chaque crayon 24 de combustible MOX empoisonné est de préférence disposé dans la couche périphérique de la zone centrale 41.

De préférence, la teneur massique maximale en plutonium des crayons 24 de la zone centrale 41 est égale à 11,5%.

De préférence, la teneur massique moyenne en plutonium dans la zone centrale 41 est comprise entre 3% et 13%.

Dans le mode de réalisation représenté sur la figure 4 et hormis les différences résultant nécessairement de la fabrication, tous les crayons 24 de la zone centrale 41 présentent la même teneur massique en plutonium.

De manière conventionnelle, on entend par teneur massique en plutonium le rapport entre la masse totale (Pu+Am) dans le combustible nucléaire et la masse totale en isotopes lourds (Pu+Am+U) dans le combustible nucléaire.

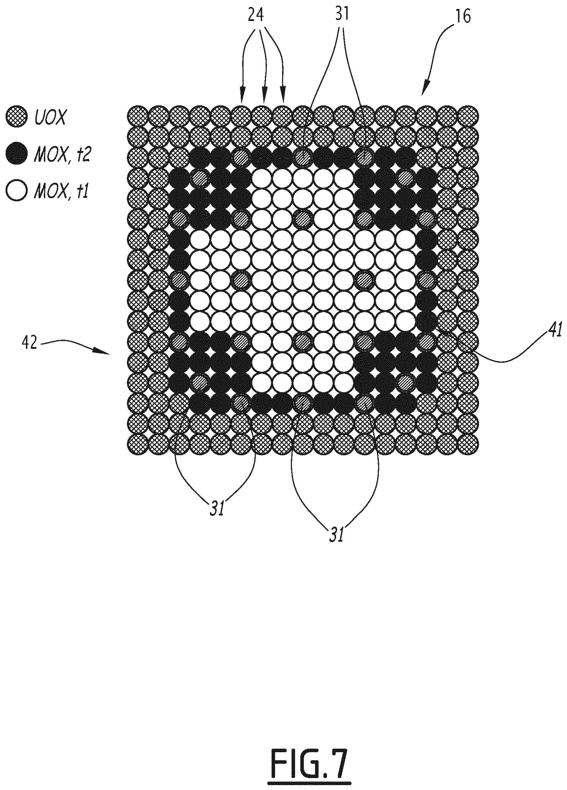

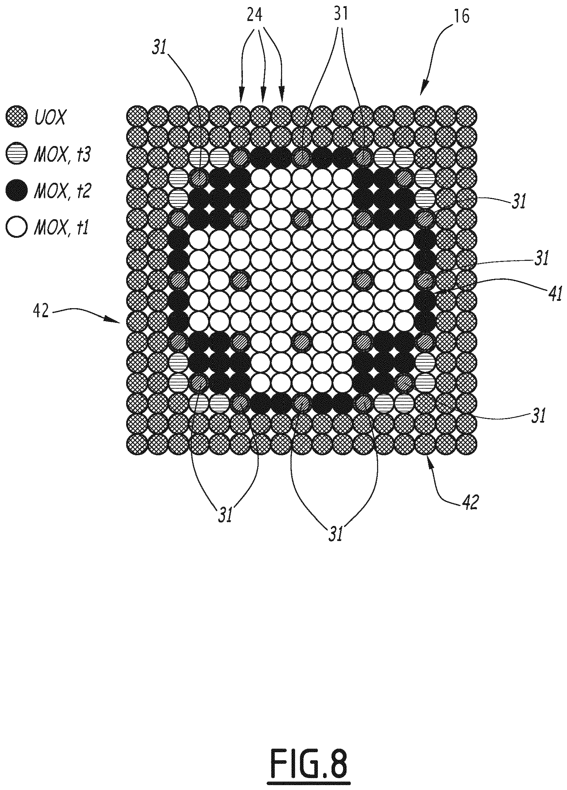

Les figures 7 et 8 représentent des assemblages 16 selon des variantes. Ces assemblages 16 ne diffèrent de l'assemblage 16 représenté sur la figure 4 que par le fait que la zone centrale 41 est zonée en ce qui concerne les teneurs massiques en plutonium des crayons 24. Ainsi, dans ces assemblages 16, les crayons 24 de la zone centrale 41 sont répartis en au moins deux groupes de crayons 24, la teneur en plutonium des crayons 24 étant identique au sein d'un même groupe, et les teneurs en plutonium des crayons 24 de groupes différents étant différentes. Plus particulièrement, la teneur en plutonium augmente de l'extérieur vers l'intérieur de la zone centrale 41.

Chaque groupe de crayons 24 forme une sous-zone de la zone centrale 41. Plus particulièrement, les groupes de crayons 24 forment des sous-zones adjacentes au sein de la zone centrale 41.

Plus particulièrement, dans l'assemblage 16 représenté sur la figure 7, les crayons 24 de la zone centrale 41 sont répartis en deux groupes de crayons 24, à savoir un groupe intérieur de crayons 24 présentant une teneur massique t1 en plutonium, et un groupe extérieur de crayons 24 présentant une teneur massique t2 en plutonium. Le groupe extérieur est disposé extérieurement par rapport au groupe intérieur.

De préférence, la teneur t1 est strictement supérieure à la teneur t2.

A titre d'exemple, la teneur massique t1 en plutonium des crayons 24 du groupe intérieur est comprise entre 8% et 13%, et notamment égale à 11,5%, tandis que la teneur massique t2 en plutonium des crayons 24 du groupe extérieur de la zone centrale 41 est comprise entre 5% et 10%, et notamment égale à 8,0%.

Dans l'exemple représenté sur la figure 7, tous les crayons 24 de la zone centrale 41 appartiennent soit au groupe intérieur, soit au groupe extérieur.

Sur la figure 7, on a schématisé les crayons 24 du groupe extérieur par des disques noirs (crayons MOX, t2), tandis que les crayons 24 du groupe intérieur sont schématisés par des cercles non remplis (crayons MOX, t1).

Dans l'exemple représenté sur la figure 7, le groupe extérieur comprend tous les crayons 24 de combustible MOX de la couche périphérique de la zone centrale 41, c'est-à-dire, dans cet exemple, de la couche dont les crayons 24 de coin appartiennent à la zone périphérique 42.

Plus particulièrement, dans cet exemple, le groupe extérieur comprend en outre certains crayons 24 d'une ou plusieurs couches intérieures de crayons 24 adjacente(s) intérieurement à cette couche périphérique, et en particulier des crayons 24 disposés au niveau des coins de ces couches intérieures. Plus particulièrement, le nombre de crayons 24 appartenant au groupe extérieur diminue de couche en couche en direction de l'intérieur de l'assemblage 16. Dans l'exemple représenté, le groupe extérieur comprend les crayons 24 disposés aux coins de deux couches adjacentes intérieurement à la couche périphérique de la zone centrale 41.

A titre d'exemple, comme représenté sur la figure 7, le groupe extérieur comprend, à chaque coin de la couche adjacente à la couche périphérique, les deux crayons 24 disposés de part et d'autre du tube-guide 31 formant le coin considéré, et, à chaque coin de la couche suivante en direction de l'intérieur de l'assemblage 16, le crayon 24 de coin, ainsi qu'un crayon 24 adjacent à ce crayon 24 de coin, de part et d'autre de celui-ci.

Dans l'exemple représenté sur la figure 7, le groupe intérieur de crayons comprend tous les crayons 24 de la zone centrale 41 n'appartenant pas au groupe extérieur, c'est-à-dire tous les crayons 24 de l'assemblage 16 depuis le centre de l'assemblage 16 jusqu'au groupe extérieur de crayons 24. Dans cet exemple, le groupe intérieur de crayons 24 est disposé en forme de croix, en vue de dessus.

Dans l'assemblage 16 représenté sur la figure 8, les crayons 24 de la zone centrale 41 sont répartis en trois groupes de crayons 24, à savoir un groupe intérieur de crayons 24 présentant une teneur massique t1 en plutonium, un groupe extérieur de crayons 24 présentant une teneur massique t3 en plutonium et un groupe intermédiaire de crayons 24, disposé entre le groupe intérieur et le groupe extérieur, présentant une teneur massique t2 en plutonium.

De préférence, la teneur t1 est strictement supérieure à la teneur t2, laquelle est elle-même strictement supérieure à la teneur t3.

A titre d'exemple, la teneur massique t1 en plutonium des crayons 24 du groupe intérieur de crayons 24 est comprise entre 8% et 13%, et notamment égale à 11,5%, tandis que la teneur massique t2 en plutonium des crayons 24 du groupe intermédiaire de crayons 24 est comprise entre 5% et 10%, et notamment égale à 8,0% et la teneur massique t3 en plutonium des crayons 24 du groupe extérieur de crayons 24 est comprise entre 3% et 7%, et notamment égale à 6,0%.

Dans l'exemple représenté sur la figure 8, tous les crayons 24 de la zone centrale 41 appartiennent à l'un des groupes intérieur, intermédiaire ou extérieur.

Sur la figure 8, on a schématisé :
- les crayons 24 du groupe extérieur par des cercles hachurés horizontalement (crayons MOX, t3),
- les crayons 24 du groupe intermédiaire par des disques noirs (crayons MOX, t2), et
- les crayons 24 du groupe intérieur par des cercles non remplis (crayons MOX, t1).

Dans l'exemple représenté sur la figure 8, le groupe extérieur de crayons 24 comprend au moins certains crayons 24 de combustible MOX de la couche périphérique de la zone centrale 41, ces crayons 24 étant disposés au niveau des coins de cette couche périphérique, le crayon 24 de coin de cette couche périphérique étant, dans cet exemple, formé par un crayon 24 de combustible UOX de la zone périphérique 42. Plus particulièrement, dans l'exemple représenté, le groupe extérieur de crayons 24 comprend, à chaque coin de la couche périphérique de crayons de la zone centrale 41, les deux crayons 24 adjacents au crayon 24 de coin de part et d'autre de celui-ci.

Dans l'exemple représenté sur la figure 8, le groupe intermédiaire de crayons 24 comprend les crayons 24 de combustible MOX résiduels de la couche périphérique de crayons de la zone centrale 41, ainsi que les crayons 24 disposés aux coins de deux couches adjacentes intérieurement à la couche périphérique de la zone centrale 41. A titre d'exemple, comme représenté sur la figure 8, le groupe extérieur de crayons 24 comprend, à chaque coin de la couche adjacente à la couche périphérique, les deux crayons 24 disposés de part et d'autre du tube-guide 31 formant le coin considéré, et, à chaque coin de la couche suivante en direction de l'intérieur de l'assemblage 16, le crayon 24 de coin, ainsi qu'un crayon 24 adjacent à ce crayon 24 de coin, de part et d'autre de celui-ci.

Enfin, dans l'exemple représenté sur la figure 8, le groupe intérieur de crayons 24 présente une forme identique à celle décrite au regard de la figure 7. Ainsi, il comprend tous les crayons 24 de la zone centrale 41 non inclus dans le groupe extérieur ou intermédiaire, c'est-à-dire les crayons 24 de l'assemblage 16 depuis le centre de l'assemblage 16 jusqu'au groupe intermédiaire de crayons 24. Dans cet exemple, les crayons 24 du groupe intérieur de crayons 24 sont disposés en forme de croix, en vue de dessus.

L'homme du métier comprendra que le nombre de groupes et le nombre et la position des crayons 24 de chaque groupe est à adapter en fonction du mode de gestion du réacteur 1 considéré. De manière générale, les crayons 24 de combustible MOX de plus faible teneur en plutonium sont de préférence disposés à proximité des crayons 24 de combustible UOX.

L'invention concerne également un coeur 2 de réacteur nucléaire 1 comprenant au moins un assemblage de combustible 16 selon l'invention, tel que décrit ci-dessus notamment au regard des figures 4, 7 et 8. Dans la suite, l'assemblage 16 selon l'invention sera appelé « premier assemblage 16 ».

Selon un premier exemple, le coeur 2 de réacteur 1 comprend uniquement des premiers assemblages 16.

Selon une variante, le coeur 2 de réacteur nucléaire 1 comprend :
- au moins un premier assemblage 16, et
- au moins un assemblage de combustible 16 différent du premier assemblage 16, appelé par la suite « deuxième assemblage 16 ».

Le deuxième assemblage 16 est par exemple choisi parmi :
- un assemblage dans lequel tous les crayons 24 contiennent, avant irradiation, de l'oxyde d'uranium mais pas d'oxyde de plutonium, c'est-à-dire un assemblage UOX, et
- un assemblage dans lequel tous les crayons 24 sont des crayons 24 dont le combustible, avant irradiation, est exclusivement à base d'oxyde mixte d'uranium et de plutonium, c'est-à-dire un assemblage MOX.

En particulier, le coeur 2 comprend un ou de plusieurs premiers assemblages 16, les autres assemblages du coeur 2 étant des assemblages UOX et/ou des assemblages MOX.

Par exemple, en phase de passage d'un coeur 2 en gestion mixte, c'est-à-dire comprenant à la fois des assemblages MOX et des assemblages UOX à un coeur 2 chargé partiellement ou en totalité en premiers assemblages 16, les premiers assemblages 16 chargés dans le coeur 2 cohabitent à la fois avec des deuxièmes assemblages 16 de combustible UOX et des deuxièmes assemblages 16 de combustible MOX.

Lors de gestions particulières ou en phase d'acquisition de données de retour d'expérience et de licensing, un coeur 2 en gestion 100% UOX, un coeur 2 en gestion 100% MOX ou un coeur 2 en gestion mixte peut recevoir un seul premier assemblage 16. Réciproquement un coeur 2 en gestion 100% premiers assemblages 16 peut recevoir un seul assemblage UOX ou un seul assemblage MOX.

Dans un mode préféré de réalisation, l'invention concerne un coeur 2 de réacteur nucléaire 1 comprenant :
- au moins un premier assemblage 16, et
- une pluralité de deuxièmes assemblages 16, tous les crayons 24 des deuxièmes assemblages 16 contenant, avant irradiation, de l'oxyde d'uranium mais pas d'oxyde de plutonium, c'est-à-dire des assemblages UOX.

Dans cette configuration, le premier assemblage 16 est, en particulier, adjacent, sur l'une au moins de ses faces latérales, et par exemple sur chacune de ses faces latérales, à un deuxième assemblage 16.

De préférence, le coeur 2 comprend au moins 20% de premiers assemblages 16, et par exemple 30% ou 50% de premiers assemblages 16, le reste étant des deuxièmes assemblages 16, en particulier des assemblages UOX.

De préférence, les crayons 24 des deuxièmes assemblages 16 présentent, avant irradiation, une teneur en uranium 235 strictement inférieure à celle de l'uranium des crayons 24 de la zone périphérique 42 du ou des premiers assemblages 16.

Un assemblage 16 selon l'invention, qui comprend uniquement des crayons 24 de combustible MOX dans sa zone centrale 41 et uniquement des crayons 24 de combustible UOX dans sa zone périphérique 42, permet le chargement d'une quantité importante de plutonium issu du recyclage de combustible UOX et/ou MOX.

Des études réalisées par les inventeurs ont montré qu'un assemblage 16 selon l'invention chargé dans un coeur 2 de réacteur nucléaire 1 comprenant des assemblages UOX permet en outre d'aboutir à l'équivalence énergétique avec les assemblages UOX présents dans ledit coeur 2. En particulier, cette équivalence énergétique est obtenue en dépit de la diminution de la qualité du plutonium au fur et à mesure des recyclages, l'assemblage 16 selon l'invention autorisant ainsi le multi-recyclage du combustible MOX. En outre, cet assemblage 16 permet d'obtenir l'équivalence énergétique sans qu'il soit nécessaire d'enrichir l'uranium support des crayons de combustible MOX. Il peut ainsi être fabriqué dans des installations de fabrication de combustible MOX existantes, sans entraîner de complexification du processus de fabrication.

De plus, l'assemblage 16 selon l'invention permet d'obtenir l'équivalence énergétique avec des assemblages UOX tout en atteignant une distribution radiale de puissance dans les crayons 24 acceptable, en particulier à l'interface entre ce premier assemblage 16 et un deuxième assemblage 16 de combustible UOX adjacent à ce premier assemblage 16 soit par un côté, soit par un angle, notamment lorsque ces assemblages 16 sont déformés sous l'effet d'un séjour en réacteur.

En particulier, dans un coeur 2 mixte comprenant des assemblages 16 de combustible UOX et des assemblages 16 selon l'invention, l'assemblage 16 selon l'invention permet, grâce à la présence de crayons UOX en périphérie de l'assemblage 16 selon l'invention, d'éviter une interface MOX/UOX avec un assemblage 16 de combustible UOX adjacent, tout en compensant la perte de réactivité résultant du multi-recyclage du plutonium.

Enfin, le zonage de la partie centrale 41 selon le mode de réalisation des figures 7 et 8 permet d'améliorer encore davantage la gestion du pic de puissance dans les crayons 24 de combustible MOX. En particulier, ce zonage permet d'ajuster la teneur en plutonium dans les différentes sous-zones de la zone centrale 41 de l'assemblage 16 selon l'invention de sorte à limiter les impacts liés à l'hétérogénéité radiale de modération dans l'assemblage 16 selon l'invention due à la présence des tubes-guides 31 et de l'éventuel tube d'instrumentation, ces derniers étant remplis d'eau pendant le fonctionnement normal du réacteur 1, et constituant par conséquence des zones de modération accrue.

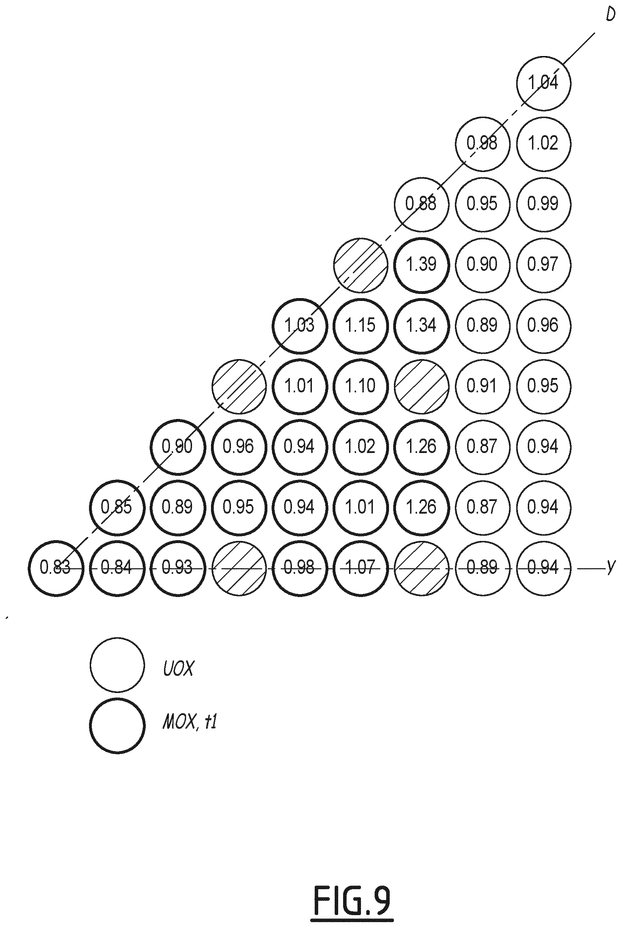

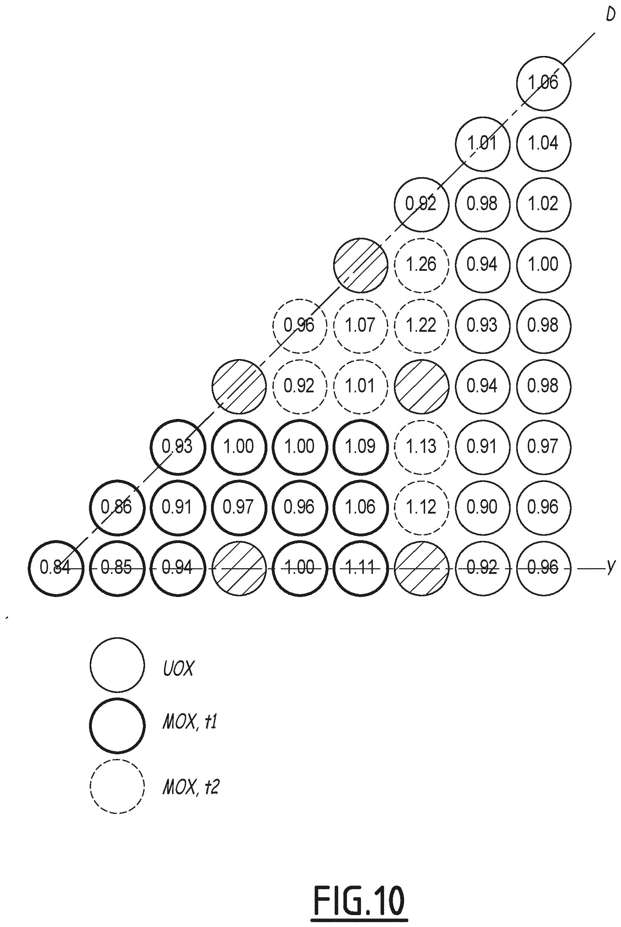

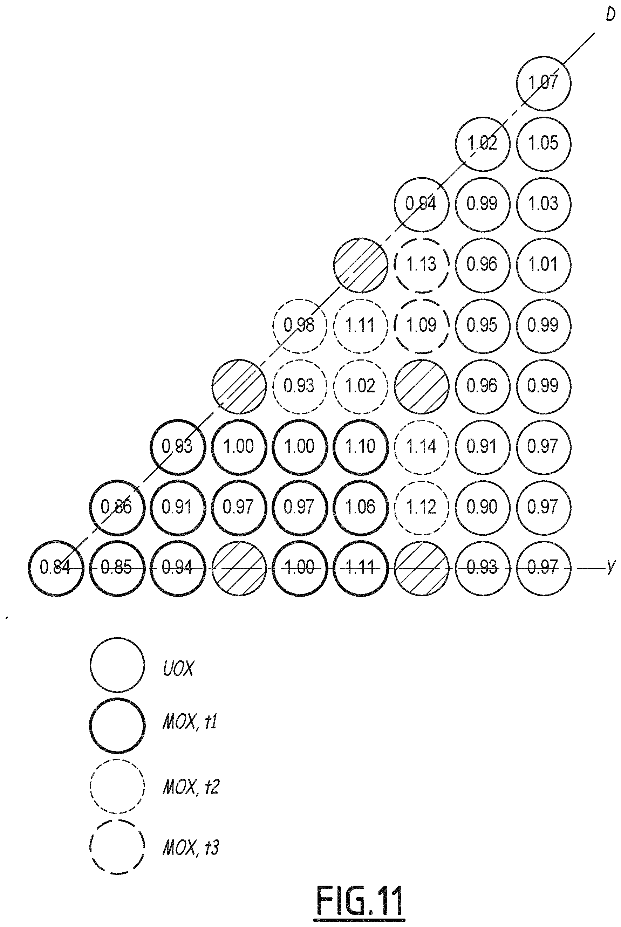

Les figures 9 à 11 sont des vues schématiques de la distribution radiale de puissance dans l'assemblage 16 de la figure 7, en début d'irradiation. Les figures 9 à 11 représentent chacune un huitième de l'assemblage 16, le reste de l'assemblage 16 pouvant être reconstitué par symétrie axiale par rapport à ce huitième. Sur les figures 9 à 11, l'axe noté « D » correspond à une diagonale de l'assemblage 16, tandis que l'axe noté « Y » correspond à une médiatrice d'un côté de l'assemblage 16, le crayon 24 disposé à l'intersection des axes D et Y correspondant au crayon 24 disposé au centre de l'assemblage 16. Par ailleurs, les tubes guides 31 y sont schématisés par des hachures diagonales.

Comme on peut le voir sur les figures 9 à 11, les assemblages 16 selon l'invention permettent d'obtenir une équivalence énergétique avec des assemblages UOX tout en atteignant une distribution radiale de puissance dans les crayons 24, et en particulier tant dans les crayons 24 périphériques que dans les crayons 24 de la zone centrale 41 adjacents à la zone périphérique 42, qui soit acceptable. Dans ce contexte, la puissance linéique limite est la puissance qui conduirait à la fusion du combustible.

On constate également, lorsque l'on compare les figures 9, 10 et 11, que, bien que les modes de réalisation des figures 4 et 7 permettent d'obtenir des résultats satisfaisants en termes de distribution radiale de puissance, les meilleurs résultats sont obtenus dans le cas où les crayons 24 sont répartis en trois groupes de crayons ayant des teneurs en plutonium différentes. Ainsi, un assemblage 16 zoné en ce qui concerne la teneur en plutonium, comprenant trois groupes de crayons 24 agencés dans des sous-zones adjacentes de la zone centrale 41, tel que décrit au regard de la figure 8, permet de minimiser les pics de puissance.

Dans le mode de réalisation préféré de l'invention, le zonage est obtenu grâce à l'utilisation de crayons MOX présentant des teneurs différentes en plutonium, plutôt que par l'utilisation de plutonium présentant des compositions isotopiques différentes. L'utilisation d'une seule teneur isotopique de plutonium dans l'ensemble de la zone centrale 41, définie à titre préféré, permet de simplifier le procédé de fabrication, et donc de minimiser le coût de fabrication.

## Revendications

1. Assemblage de combustible nucléaire (16) pour réacteur nucléaire (1) à eau pressurisée, l'assemblage (16) comprenant des crayons (24) de combustible nucléaire, des tubes-guides (31) de réception de crayons absorbants (40) d'une grappe de commande (20) et éventuellement un tube d'instrumentation, les crayons (24) étant répartis en deux zones (41, 42) :
- une zone centrale (41), tous les crayons (24) de la zone centrale (41) étant des crayons (24) dont le combustible, avant irradiation, est exclusivement à base d'oxyde mixte d'uranium et de plutonium ; et
- une zone périphérique (42) s'étendant le long de faces extérieures de l'assemblage (16), tous les crayons (24) de la zone périphérique (42) contenant, avant irradiation, de l'oxyde d'uranium mais pas d'oxyde de plutonium,
**caractérisé en ce que** l'uranium des crayons (24) de la zone centrale (41) présente une teneur massique en uranium 235 strictement inférieure à la teneur massique en uranium 235 des crayons (24) de la zone périphérique (42).

2. Assemblage (16) selon la revendication 1, dans lequel certains au moins des crayons (24) de la zone centrale (41) sont des crayons (24) contenant un poison neutronique.

3. Assemblage (16) selon la revendication 1 ou 2, dans lequel la zone centrale (41) est zonée en ce qui concerne la teneur en plutonium des crayons (24), la teneur en plutonium augmentant de l'extérieur vers l'intérieur de la zone centrale (41).

4. Assemblage (16) selon la revendication 3, dans lequel les crayons (24) de la zone centrale (41) sont répartis en trois groupes de crayons (24), la teneur en plutonium des crayons (24) étant identique au sein du même groupe, et les teneurs en plutonium des crayons (24) de groupes différents étant différentes.

5. Assemblage (16) selon l'une quelconque des revendications précédentes, dans lequel tous les crayons (24) de la zone centrale (41) présentent, avant irradiation, sensiblement la même composition isotopique du plutonium.

6. Assemblage (16) selon l'une quelconque des revendications précédentes, dans lequel certains au moins des crayons (24) de la zone périphérique (42) sont des crayons (24) contenant un poison neutronique.

7. Assemblage (16) selon l'une quelconque des revendications précédentes, dans lequel l'assemblage (16) ne comprend pas de boîtier extérieur.

8. Assemblage (16) selon l'une quelconque des revendications précédentes, dans lequel les crayons (24), les tubes-guides (31) et l'éventuel tube d'instrumentation occupent tous les noeuds d'un réseau régulier.

9. Assemblage (16) selon l'une quelconque des revendications précédentes, dans lequel le combustible nucléaire est conditionné sous forme de pastilles (36) pleines contenues dans les crayons (24).

10. Coeur (2) de réacteur nucléaire (1) comprenant au moins un assemblage de combustible (16) selon l'une quelconque des revendications précédentes.

11. Coeur (2) selon la revendication 10, dans lequel tous les assemblages de combustible (16) sont des assemblages (16) selon l'une quelconque des revendications 1 à 9.

12. Coeur (2) selon la revendication 10, comprenant :
- au moins un premier assemblage de combustible (16), le premier assemblage (16) étant un assemblage selon l'une quelconque des revendications 1 à 9, et
- au moins un deuxième assemblage de combustible (16), différent du premier assemblage (16).

13. Coeur (2) selon la revendication 12, comprenant une pluralité de deuxièmes assemblages (16), tous les crayons de combustible (24) des deuxièmes assemblages (16) contenant, avant irradiation, de l'oxyde d'uranium mais pas d'oxyde de plutonium, le au moins un premier assemblage (16) étant adjacent, sur l'une au moins de ses faces latérales, à un deuxième assemblage (16).

14. Coeur (2) selon la revendication 13, dans lequel les crayons (24) des deuxièmes assemblages (16) présentent une teneur en uranium 235 strictement inférieure à la teneur en uranium 235 des crayons (24) de la zone périphérique (42) du ou des premiers assemblages (16).

## Patentansprüche

1. Kernbrennstoffanordnung (16) für einen Druckwasser-Kernreaktor (1), die Anordnung (16) umfassend das Kernbrennstäbe (24), Führungsrohre (31) zum Aufnehmen von Absorberstäben (40) eines Steuerbündels (20) und gegebenenfalls ein Instrumentierungsrohr, wobei die Stäbe (24) in zwei Zonen (41, 42) aufgeteilt sind:
- einen mittleren Bereich (41), wobei alle Stäbe (24) in dem mittleren Bereich (41) Stäbe (24) sind, deren Brennstoff vor Bestrahlung ausschließlich aus Mischoxid von Uran und Plutonium besteht; und
- einen Randbereich (42), der sich entlang von Außenflächen der Anordnung (16) erstreckt, wobei alle Stäbe (24) des Randbereichs (42) vor Bestrahlung Uranoxid, aber kein Plutoniumoxid enthalten,
**dadurch gekennzeichnet, dass** das Uran der Stäbe (24) des mittleren Bereichs (41) einen Massegehalt an Uran 235 aufweist, der strikt niedriger ist als der Massegehalt an Uran 235 der Stäbe (24) des Randbereichs (42).

2. Anordnung (16) nach Anspruch 1, wobei mindestens einige der Stäbe (24) in dem mittleren Bereich (41) Stäbe (24) sind, die ein Neutronengift enthalten.

3. Anordnung (16) nach Anspruch 1 oder 2, wobei der mittlere Bereich (41) hinsichtlich des Plutoniumgehalts der Stäbe (24) zoniert ist, wobei der Plutoniumgehalt von der Außenseite zu der Innenseite des mittleren Bereichs (41) hin zunimmt.

4. Anordnung (16) nach Anspruch 3, wobei die Stäbe (24) des mittleren Bereichs (41) in drei Gruppen von Stäben (24) aufgeteilt sind, wobei der Plutoniumgehalt der Stäbe (24) innerhalb der gleichen Gruppe gleich ist und der Plutoniumgehalt der Stäbe (24) aus verschiedenen Gruppen verschieden ist.

5. Anordnung (16) nach einem der vorherigen Ansprüche, wobei alle Stäbe (24) des mittleren Bereichs (41) vor Bestrahlung im Wesentlichen die gleiche Isotopenzusammensetzung von Plutonium aufweisen.

6. Anordnung (16) nach einem der vorherigen Ansprüche, wobei mindestens einige der Stäbe (24) in dem Randbereich (42) Stäbe (24) sind, die ein Neutronengift enthalten.

7. Anordnung (16) nach einem der vorherigen Ansprüche, wobei die Anordnung (16) kein äußeres Gehäuse umfasst.

8. Anordnung (16) nach einem der vorherigen Ansprüche, wobei die Stäbe (24), die Führungsrohre (31) und das mögliche Instrumentierungsrohr alle Knotenpunkte eines regelmäßigen Netzes einnehmen.

9. Anordnung (16) nach einem der vorherigen Ansprüche, wobei der Kernbrennstoff in Form von vollen Pellets (36) verpackt ist, die in den Brennstäben (24) enthalten sind.

10. Kern (2) eines Kernreaktors (1), umfassend mindestens eine Brennstoffanordnung (16) nach einem der vorherigen Ansprüche.

11. Kern (2) nach Anspruch 10, wobei alle Brennstoffanordnungen (16) Anordnungen (16) nach einem der Ansprüche 1 bis 9 sind.

12. Kern (2) nach Anspruch 10, umfassend:
- mindestens eine erste Brennstoffanordnung (16), wobei die erste Brennstoffanordnung (16) eine Anordnung nach einem der Ansprüche 1 bis 9 ist, und
- mindestens eine zweite Brennstoffanordnung (16), die sich von der ersten Anordnung (16) unterscheidet.

13. Kern (2) nach Anspruch 12, umfassend eine Vielzahl von zweiten Anordnungen (16), wobei alle Brennstäbe (24) der zweiten Anordnung (16) vor Bestrahlung Uranoxid, aber kein Plutoniumoxid enthalten, wobei die mindestens eine erste Anordnung (16) auf mindestens einer seiner Seitenflächen an eine zweite Anordnung (16) angrenzt.

14. Kern (2) nach Anspruch 13, wobei die Stäbe (24) der zweiten Anordnung (16) einen Gehalt an Uran 235 aufweisen, der strikt unter dem Gehalt an Uran 235 der Stäbe (24) des Randbereichs (42) der ersten Anordnung(en) (16) ist.

## Claims

1. A nuclear fuel assembly (16) for a pressurised water nuclear reactor (1), the assembly (16) comprising nuclear fuel rods (24), guide tubes (31) for receiving absorbing rods (40) of a command cluster (20) and possibly an instrumentation tube, the rods (24) being divided into two zones (41, 42):
- a central zone (41), all rods (24) in the central zone (41) being rods (24) whose fuel, prior to irradiation, is exclusively based on mixed oxide of uranium and plutonium; and
- a peripheral zone (42) extending along outer faces of the assembly (16), all rods (24) in the peripheral zone (42) containing, prior to irradiation, uranium oxide but no plutonium oxide,
**characterised in that** the uranium of the rods (24) of the central zone (41) has a mass content of uranium 235 strictly lower than the mass content of uranium 235 of the rods (24) of the peripheral zone (42).

2. Assembly (16) according to claim 1, wherein at least some of the rods (24) in the central area (41) are rods (24) containing a neutron poison.

3. Assembly (16) according to claim 1 or 2, wherein the core area (41) is zoned with respect to the plutonium content of the rods (24), the plutonium content increasing from the outside to the inside of the core area (41).

4. Assembly (16) according to claim 3, wherein the rods (24) in the central zone (41) are divided into three groups of rods (24), the plutonium content of the rods (24) being the same within the same group, and the plutonium contents of the rods (24) in different groups being different.

5. Assembly (16) according to any one of the preceding claims, wherein all the rods (24) in the central zone (41) have substantially the same plutonium isotopic composition before irradiation.

6. Assembly (16) according to any one of the preceding claims, wherein at least some of the rods (24) in the peripheral zone (42) are rods (24) containing a neutron poison.

7. Assembly (16) according to any one of the preceding claims, in which the assembly (16) does not comprise an outer housing.

8. Assembly (16) according to any one of the preceding claims, wherein the rods (24), the guide tubes (31) and the possible instrumentation tube all occupy nodes of a regular array.

9. Assembly (16) according to any one of the preceding claims, wherein the nuclear fuel is packaged in form of solid pellets (36) contained in the rods (24).

10. Core (2) of a nuclear reactor (1) comprising at least one fuel assembly (16) according to any one of the preceding claims.

11. Core (2) according to claim 10, wherein all the fuel assemblies (16) are assemblies (16) according to any one of claims 1 to 9.

12. Core (2) according to claim 10, comprising:
- at least one first fuel assembly (16), the first assembly (16) being an assembly according to any one of claims 1 to 9, and
- at least one second fuel assembly (16), different from the first assembly (16).

13. Core (2) as claimed in claim 12 comprising a plurality of second assemblies (16), all fuel rods (24) of the second assemblies (16) containing, prior to irradiation, uranium oxide but no plutonium oxide, the at least one first assembly (16) being adjacent, on at least one of its side faces, to a second assembly (16).

14. Core (2) according to claim 13, wherein the rods (24) of the second assemblies (16) have a uranium-235 content strictly lower than the uranium-235 content of the rods (24) of the peripheral zone (42) of the first assembly or assemblies (16).
